# EUROPÄISCHE PATENTSCHRIFT

(11) **EP 1 746 322 B1**
(45) Veröffentlichungstag und Bekanntmachung des Hinweises auf die Patenterteilung: **02.08.2017**
(21) Anmeldenummer: 06011156.4
(22) Anmeldetag: 31.05.2006
(51) Int. Cl.: F16L 3/10, F16L 3/205, F16L 3/223

(54) **Schelle zur Befestigung mindestens einer Leitung**
Clamp for fixing at least one conduit
Collier de serrage pour la fixation d'au moins un conduit

(30) Priorität: 20.07.2005 DE 102005033891
(43) Veröffentlichungstag der Anmeldung: 24.01.2007
(73) Patentinhaber: HYDAC Accessories GmbH, 66280 Sulzbach/Saar (DE)
(72) Erfinder: Borzucki, Roman, 66822 Lebach (DE)
(74) Vertreter: Bartels & Partner

(56) Entgegenhaltungen:
- EP-A1- 0 626 533
- DE-U1- 8 806 714
- FR-A5- 2 040 893
- US-A- 3 606 218
- US-A- 4 857 690

## Beschreibung

Die Erfindung bezieht sich auf eine Schelle zur Befestigung mindestens einer Leitung, vorzugsweise mehrerer Leitungen, mit den Merkmalen im Oberbegriff von Anspruch 1.

Schellen dieser Art, bei denen vorzugsweise mehrere Durchgänge vorgesehen sind, die Klemmkanäle für Leitungen in nebeneinander liegender Anordnung bilden, werden beispielsweise zur Verankerung von Hydraulikleitungen bei Hydraulikbaggern oder anderen Arbeitsgeräten verwendet. Gleichermaßen eigenen sich solche Schellen für die Befestigung anderweitiger Schlauch- oder Rohrleitungen oder anderer zu fixierender Stränge, wie elektrische Kabel oder dergleichen.

Um bei gegebenen rauhen Betriebsbedingungen, bei denen entsprechend große, durch die Schelle aufzunehmende mechanische Belastungen auftreten, eine ausreichende Betriebssicherheit zu gewährleisten, ist man bestrebt, die Innenseite der Vertiefungen, die die Klemmkanäle für die zu befestigenden Leitungen bilden, in entsprechender Weise geeignet auszubilden, so dass eine gute Klemmwirkung erreicht wird. So ist bei einer bekannten Schelle der eingangs genannten Art, wie sie im Dokument DE 201 07 970.4 offenbart ist, an der Innenseite der Vertiefungen, die im jeweiligen Klemmkörper Klemmkanäle begrenzen, ein ballig radial einwärts gewölbter Flächenbereich vorgesehen, der eine bereichsweise Veränderung des wirksamen Durchmessers des Klemmkanales bewirkt. Durch die so erreichte bereichsweise erhöhte Flächenpressung an der jeweils zu fixierenden Leitung wird eine Verbesserung der Klemmwirkung erstrebt. Wie sich jedoch gezeigt hat, ist unter gewissen Betriebsbedingungen keine ausreichende Betriebssicherheit erreichbar, beispielsweise wenn sich aufgrund von thermischen Einflüssen Veränderungen der Leitung ergeben, seien es Durchmesseränderungen oder eine thermisch bedingte Verringerung ihrer Steifigkeit. Auch ist kein Ausgleich bei entsprechenden Durchmessertoleranzen möglich.

Die FR 2 040 893 beschreibt eine Schelle zur Befestigung mindestens einer Leitung mit zwei durch ein Spannmittel aneinander anlegbaren Klemmkörpern, von denen zumindest einer für zu befestigende Leitungen jeweils eine Vertiefung aufweist, die Teil eines Klemmkanals bildet, der sich in Axialrichtung der zu befestigenden Leitung erstreckt, und wobei an der Innenseite der jeweiligen Vertiefung eine eine bereichsweise Änderung des wirksamen Durchmessers des Klemmkanales bewirkende Einrichtung vorgesehen ist, wobei die den wirksamen Durchmesser des Klemmkanales bereichsweise verändernde Einrichtung durch zumindest ein Federelement gebildet ist, das für die zu befestigende Leitung eine sich entlang zumindest eines Teilabschnittes der Innenseite der Vertiefung erstreckende Anlagefläche bildet, die in Radialrichtung des Klemmkanales federnachgiebig bewegbar ist, und wobei das zumindest eine Federelement durch eine mit dem Klemmkörper einstückig geformte Federnase gebildet ist.

Weitere Schellen gehen aus der US 3 606 218, der DE 88 06 714 U1, der US 4 857 690 und der EP 0 626 533 A1 hervor.

Ausgehend von diesem Stand der Technik stellt sich die Erfindung die Aufgabe, eine Schelle zur Verfügung zu stellen, die eine besonders betriebssichere Verankerung von Leitungen ermöglicht.

Bei einer Schelle der eingangs genannten Art ist diese Aufgabe erfindungsgemäß dadurch gelöst, dass sich jede Federnase, ausgehend von der Übergangsstelle zum Klemmkörper, in einer an der Innenseite der Vertiefung radial vertieften Aussparung auskragend erstreckt und mit dem auskragenden Abschnitt für die zu befestigende Leitung die Anlagefläche bildet, die in der Aussparung federnachgiebig radial bewegbar ist.

Es ist ferner vorgesehen, dass die den wirksamen Durchmesser des Klemmkanales bereichsweise verändernde Einrichtung durch zumindest ein Federelement gebildet ist, das für die zu befestigende Leitung eine sich entlang zumindest eines Teilabschnittes der Innenseite der Vertiefung erstreckende Anlagefläche bildet, die in Radialrichtung des Klemmkanales federnachgiebig bewegbar ist.

Dank der erfindungsgemäß vorgesehenen Federnachgiebigkeit von den wirksamen Durchmesser des Klemmkanales definierenden Anlageflächen werden nicht nur Durchmessertoleranzen der Leitungen wirksam ausgeglichen, sondern es ist auch sichergestellt, dass sich bei Veränderungen, die sich aufgrund thermischer Belastungen ergeben können, eine einwandfreie Klemmung der zu befestigenden Leitung gewährleistet ist.

Das zumindest eine Federelement ist durch eine mit dem Klemmkörper einstückig geformte Federnase gebildet. Durch die solchermaßen einstückige Gestaltung des Klemmkörpers ergibt sich eine besondere Vereinfachung der Handhabung und Anwendung der Schelle, weil keine zusätzlichen Bauteile für die Erzielung der Federwirkung am Klemmkanal montiert werden müssen.

Vorzugsweise besitzt jede Vertiefung mehrere in Axialrichtung in einem Abstand voneinander angeordnete Federnasen.

Diese können paarweise angeordnet sein, wobei beide Federnasen eines Paares jeweils am Rand der Vertiefung mit dem Klemmkörper zusammenhängen und sich, miteinander fluchtend, in zur Axialrichtung des Klemmkanales senkrechter Erstreckung in der Aussparung auskragend zu einem am Grund der Vertiefung gelegenen Zentralbereich derselben erstrecken.

Bei Ausführungsbeispielen, bei denen sich in den Vertiefungen jeweils zwei Federnasenpaare befinden, ist die Anordnung vorzugsweise so getroffen, dass die Aussparungen für die Federnasen durch einen sich im mittleren Längenbereich der jeweiligen Vertiefung über deren gesamte Innenseite erstreckenden, von Aussparungen freien Bereich voneinander getrennt sind und dass sich jede Aussparung, ausgehend von dem von Aussparung freien mittleren Längenbereich der Vertiefung, in Axialrichtung bis zu einem Bereich erstreckt, der einen Abstand vom benachbarten axialen Endrand des Klemmkörpers besitzt. Beidseits neben den Federnasenpaaren befinden sich daher unvertiefte, sich entlang des Umfanges der Vertiefung erstreckende Flächenbereiche.

Vorzugsweise endigt jede Aussparung an den jeweils auskragenden, freien Enden der Federnasen in einem in Axialrichtung verlaufenden Quersteg, der beiden, einem Federnasenpaar zugehörigen Aussparungen gemeinsam ist.

Vorzugsweise sind die Querstege so geformt und dimensioniert, dass die radial innen liegende Endfläche der Querstege für den an der jeweiligen Vertiefung gebildeten Klemmkanal den gleichen Durchmesser definiert, wie die von Aussparung freien Bereiche, die sich seitlich der Aussparungen entlang der gesamten Innenseite der Vertiefungen erstrecken.

Nachstehend ist die Erfindung anhand eines in der Zeichnung dargestellten Ausführungsbeispieles im Einzelnen erläutert. Es zeigen:
- Fig. 1: eine Seitenansicht eines von zwei einander anlegbaren Klemmkörpern eines Ausführungsbeispieles der erfindungsgemäßen Schelle, bei der es sich um eine sogenannte Reihenschelle handelt und wobei der in der Fig. gezeigte Klemmkörper abgebrochen dargestellt ist;
- Fig. 2: eine gegenüber Fig. 1 vergrößerte Darstellung lediglich des in Fig. 1 mit II angegebenen Bereiches des Klemmkörpers;
- Fig. 3: eine im gleichen Maßstab wie Fig. 2 gezeichnete, abgebrochene Draufsicht des in Fig. 1 linksseitig gelegenen Endbereiches des Klemmkörpers;
- Fig. 4: eine in noch größerem Maßstab und perspektivisch gezeichnete Schrägansicht des in Fig. 3 gezeigten Endbereiches des Klemmkörpers; und
- Fig. 5: einen in noch größerem Maßstab gezeichneten Teillängsschnitt entsprechend der Schnittlinie 5-5 von Fig. 3.

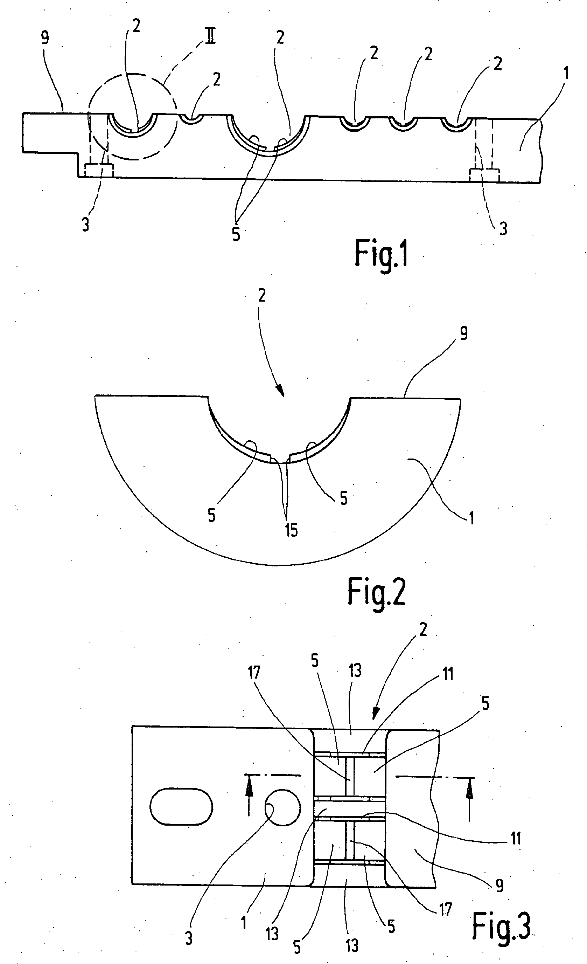

Nachstehend ist die Erfindung anhand eines Ausführungsbeispieles in Form einer sogenannten Reihenschelle erläutert, bei der zwei langgestreckte, leistenartige Klemmkörper, von denen in Fig. 1 lediglich ein Klemmkörper abgebrochen gezeigt und mit 1 bezeichnet ist, mittels einer nicht gezeigten Spanneinrichtung aneinander anlegbar sind. Beim gezeigten Ausführungsbeispiel handelt es sich hierbei um nicht gezeigte Spannschrauben, die durchgehende Bohrungen 3 in den Klemmkörpern 1 durchgreifen. In der bei Reihenschellen üblichen Weise befinden sich in den Klemmkörpern 1 eine Reihe von muldenartigen Vertiefungen 2, die in den Klemmkörpern 1 im großen Ganzen halbzylindrisch mit unterschiedlichen Radien ausgebildet und in Abständen voneinander angeordnet sind, so dass durch Vereinigen der Klemmkörper 1 kreiszylindrische Durchgänge vorhanden sind, die für zu befestigende Leitungen unterschiedlicher Durchmesser passende Klemmkanäle bilden.

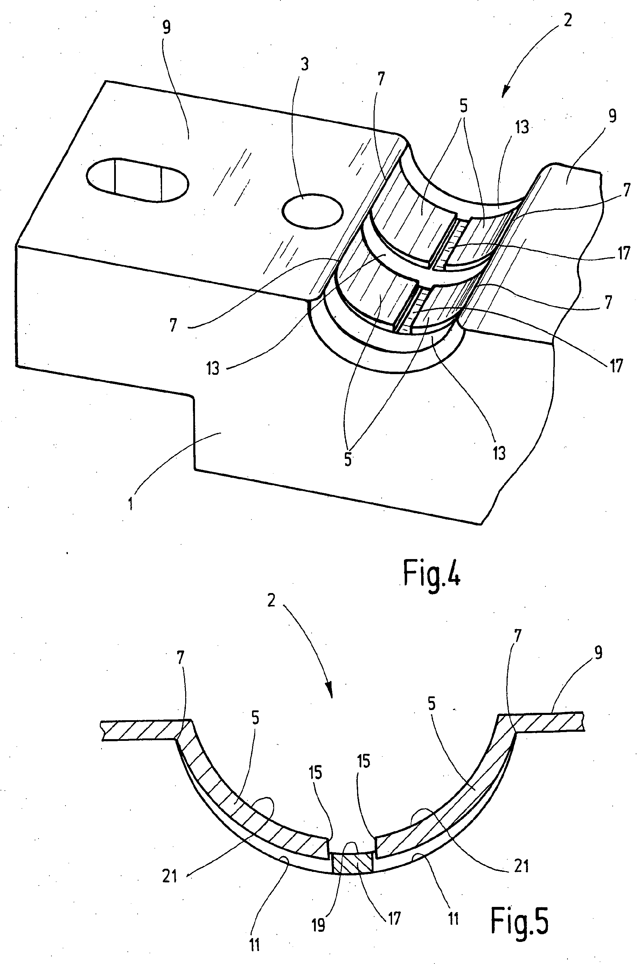

Nähere Einzelheiten der im Klemmkörper 1 ausgebildeten Vertiefungen 2, an deren Innenseite erfindungsgemäß für die zu befestigende Leitung federnachgiebige Anlageflächen vorhanden sind, sind den Fig. 2 bis 5 entnehmbar. Wie ersichtlich, sind beim vorliegenden Ausführungsbeispiel als Federelemente blattfederartige Federnasen 5 vorgesehen (in Fig. 1 nicht sämtliche beziffert), die mit dem Klemmkörper 1 einstückig an diesem angeformt sind. Zur Bildung kreisrunder Klemmkanäle haben die Vertiefungen 2 an ihrer Innenseite die Form eines halben, hohlen Kreiszylinders, wobei die Federnasen 5 an einem Ende jeweils mit dem Klemmkörper 1 an Übergangsstellen 7 zusammen hängen, die sich an denjenigen Rändern der Vertiefungen 2 befinden, die an die Anlagefläche 9 angrenzen, an der der jeweils andere Klemmkörper angelegt wird. Ausgehend von diesen Übergangsstellen 7 an den beiden Rändern der Vertiefungen 2 erstrecken sich entlang der Innenseite jeder Vertiefung 2 Aussparungen 11, die in den Vertiefungen 2 jeweils stärker vertiefte Bereiche bilden, deren Grund daher, bezogen auf die Achse des Klemmkanales, einen größeren Durchmesser umschreibt, als dies bei den von Aussparungen 11 freien Bereichen 13 der Innenseite der Fall ist, die den Nenndurchmesser des Klemmkanales definieren. Die Federnasen 5 erstrecken sich, von der jeweiligen Übergangsstelle 7 ausgehend, in den Aussparungen 11 auskragend, wobei die Federnasen 5, wie am deutlichsten aus Fig. 4 und 5 entnehmbar ist, in einem dort gezeigten, unverformten Zustand einem kleineren Krümmungsradius folgen als der Grund der jeweiligen Aussparung 11 oder die Oberfläche der von Aussparungen 11 freien Bereiche 13, die den Nenndurchmesser des Klemmkanales definieren.

Wie am deutlichsten aus Fig. 3 und 4 ersichtlich ist, erstrecken sich die Federnasen 5 paarweise, jeweils von der Übergangsstelle 7 ausgehend, in Richtung zueinander, wobei die freien Enden 15 im Zentralbereich der Vertiefung 2 (am Grund der Vertiefung) in einem Abstand voneinander sind.

Die Federnasen 5 jedes Federnasenpaares verlaufen miteinander fluchtend senkrecht zur Axialrichtung des Klemmkanales. Die blattfederartig geformten Federnasen 5 weisen zueinander parallele Seitenränder auf, die sich von der Übergangsstelle 7 bis zu einem freien Ende 15 erstrecken, das einen zu den Seitenrändern rechtwinkligen Endrand bildet. Indem Bereich zwischen den freien Enden 15 der Federnasen 5 befindet sich, als gemeinsame Begrenzung der angrenzenden Aussparungen 11, ein Quersteg 17, der mit seiner radial innen liegenden Endfläche 19 (siehe Fig. 5) den gleichen Nenndurchmesser des Klemmkanales definiert, wie dies bei den dem gleichen Radius folgenden, von Aussparungen 11 freien Bereichen 13 der Fall ist.

Wie aus Fig. 3 und 4 zu ersehen ist, sind beim vorliegenden Ausführungsbeispiel zwei Federnasenpaare vorgesehen, die so angeordnet sind, dass sie sich beidseits eines im mittleren Längenbereich der Vertiefungen 2 an der Innenseite durchgehend verlaufenden, von Aussparungen freien Bereich 13 in einem Abstand voneinander erstrecken und wobei die Federnasen 5 von den axialen Endrändern der Vertiefungen 2 ebenfalls einen Abstand besitzen, so dass auch entlang der Endränder jeweils ein unvertiefter, von Aussparungen freier Bereich 13 verbleibt, der sich an der Innenseite der Vertiefung 2 durchgehend erstreckt.

Die Fig. 4 und 5 zeigen die Federnasen 5 in unverformtem, unbelastetem Zustand, wobei sie an ihrer radial innen liegenden Seite eine Anlagefläche 21 (siehe Fig. 5) für die zu befestigende Leitung bilden, welche Anlagefläche 21 im unbelasteten Zustand einem kleineren Krümmungsradius folgt, als er dem Nenndurchmesser des jeweiligen Klemmkanales entspricht. Bei der Befestigung einer Leitung entsprechenden Durchmessers liegen daher die Anlageflächen 21 unter der durch die Elastizität des Nasenwerkstoffes verursachten Federvorspannung an der betreffenden Leitung an. Durch die federnachgiebige Beweglichkeit der Federnasen 5 in den Aussparungen 11 erfolgt die Klemmung unterschiedlicher Leitungsdurchmesser innerhalb weiter Toleranzbereiche kraftschlüssig, d. h. unter Ausgleich von Durchmesseränderungen. Bei dem Nenndurchmesser des Klemmkanales entsprechendem oder diesen übersteigendem Durchmesser der Leitung sind die Federnasen 5 in den betreffenden Aussparungen 11 vollständig aufgenommen, so dass sowohl ihre Anlagefläche 21 als auch die Oberfläche der von Aussparungen 11 freien, nicht vertieften Bereiche 13 an der Innenseite der Vertiefungen 2 als Klemmflächen zur Verfügung stehen.

Beim vorliegenden Beispiel sind als Federelemente einstückig mit dem betreffenden Klemmkörper 1 ausgebildete Federnasen 5 vorgesehen, wobei als Werkstoff für den Klemmkörper 1 ein für das Spritzformen geeigneter Kunststoffwerkstoff verwendbar ist, der Elastizitätseigenschaften aufweist, der für die Federnasen 5 eine entsprechende Federnachgiebigkeit zur Verfügung stellt. Es versteht sich, dass alternativ an der Innenseite der Vertiefungen ein gesondertes Federelement oder mehrere Federelemente vorgesehen sein könnten, beispielsweise in die Vertiefungen einsetzbare metallische Federelemente oder Federelemente aus einem gegenüber dem Werkstoff des Klemmkörpers 1 unterschiedlichen, elastischen Kunststoffwerkstoff. Anstelle der gezeigten Reihenschelle könnte es sich um eine Einfachschelle für die Befestigung einer einzelnen Schlauch- oder Rohrleitung oder dergleichen handeln.

## Patentansprüche

1. Schelle zur Befestigung mindestens einer Leitung, vorzugsweise mehrerer Leitungen, mit zwei durch ein Spannmittel aneinander anlegbaren Klemmkörpern (1), von denen zumindest einer für zu befestigende Leitungen jeweils eine Vertiefung (2) aufweist, die Teil eines Klemmkanals bildet, der sich in Axialrichtung der zu befestigenden Leitung erstreckt, und wobei an der Innenseite der jeweiligen Vertiefung (2) eine eine bereichsweise Änderung des wirksamen Durchmessers des Klemmkanales bewirkende Einrichtung (5) vorgesehen ist, wobei die den wirksamen Durchmesser des Klemmkanales bereichsweise verändernde Einrichtung durch zumindest ein Federelement (5) gebildet ist, das für die zu befestigende Leitung eine sich entlang zumindest eines Teilabschnittes der Innenseite der Vertiefung (2) erstreckende Anlagefläche (21) bildet, die in Radialrichtung des Klemmkanales federnachgiebig bewegbar ist, und wobei das zumindest eine Federelement durch eine mit dem Klemmkörper (1) einstückig geformte Federnase (5) gebildet ist, **dadurch gekennzeichnet, dass** sich jede Federnase (5), ausgehend von der Übergangsstelle (7) zum Klemmkörper (1), in einer an der Innenseite der Vertiefung (2) radial vertieften Aussparung (11) auskragend erstreckt und mit dem auskragenden Abschnitt für die zu befestigende Leitung die Anlagefläche (21) bildet, die in der Aussparung (11) federnachgiebig radial bewegbar ist.

2. Schelle nach Anspruch 1, **dadurch gekennzeichnet, dass** jede Vertiefung (2) mehrere in Axialrichtung in einem Abstand voneinander angeordnete Federnasen (5) besitzt.

3. Schelle nach Anspruch 2, **dadurch gekennzeichnet, dass** die Federnasen (5) paarweise angeordnet sind, wobei beide Federnasen (5) eines Paares jeweils am Rand (7) der Vertiefung (2) mit dem Klemmkörper (1) zusammenhängen und sich, miteinander fluchtend, in zur Axialrichtung des Klemmkanales senkrechter Erstreckung in der Aussparung (11) auskragend zu einem am Grund der Vertiefung (2) gelegenen Zentralbereich derselben erstrecken.

4. Schelle nach Anspruch 3, **dadurch gekennzeichnet, dass** die Aussparungen (11) für die Federnasen (5) durch einen sich im mittleren Längenbereich der jeweiligen Vertiefung (2) über deren gesamte Innenseite erstreckenden, von Aussparung (11) freien Bereich (13) voneinander getrennt sind und sich jede Aussparung (11), ausgehend vom mittleren, von Aussparung (11) freien Bereich (13), in Axialrichtung bis zu einem Bereich (13) erstreckt, der einen Abstand vom benachbarten axialen Endrand des Klemmkörpers (1) besitzt.

5. Schelle nach Anspruch 4, **dadurch gekennzeichnet, dass** jede Aussparung (11) an den jeweils auskragenden, freien Enden (15) der Federnasen (5) in einem in Axialrichtung verlaufenden Quersteg (17) endigt, der beiden einem Federnasenpaar zugehörigen Aussparungen (11) gemeinsam ist.

6. Schelle nach Anspruch 5, **dadurch gekennzeichnet, dass** die radial innen liegende Endfläche (19) der Querstege (17) für den an der jeweiligen Vertiefung (2) gebildeten Klemmkanal den gleichen Durchmesser definiert wie die von Aussparungen (11) freien Bereiche (13), die sich seitlich der Aussparungen (11) entlang der gesamten Innenseite der Vertiefungen (2) erstrecken.

7. Schelle nach einem der Ansprüche 1 bis 6, **dadurch gekennzeichnet, dass** beide Klemmkörper (1) Vertiefungen (2) zur Bildung von Klemmkanälen aufweisen.

8. Schelle nach Anspruch 7, **dadurch gekennzeichnet, dass** an den Vertiefungen (2) beider Klemmkörper (1) Federelemente (5) vorgesehen sind.

9. Schelle nach Anspruch 8, **dadurch gekennzeichnet, dass** die Vertiefungen (2) beider Klemmkörper (1) und/oder die Federelemente (5) an den Vertiefungen (2) beider Klemmkörper (1) gleichartig ausgebildet sind.

10. Schelle nach einem der Ansprüche 1 bis 9, **dadurch gekennzeichnet, dass** zumindest einer der Klemmkörper (1) aus einem Kunststoffwerkstoff, vorzugsweise einem Polyamid mit Flammhemmer, spritzgeformt ist.

## Claims

1. A clamp for fastening at least one conduit, preferably a number of conduits, with two clamping bodies (1) that can be placed against one another by tensioning means, at least one of which clamping bodies has a respective depression (2) for conduits to be fastened and which forms part of a clamping channel which extends in the axial direction of the conduit to be fastened, and there being provided on the inside of the respective depression (2) a device (5) that brings about a change, in some regions, of the effective diameter of the clamping channel, the device changing the effective diameter of the clamping channel in some regions being formed by at least one spring element (5) which forms a contact surface (21) for the conduit that is to be fastened extending along at least a partial section of the inside of the depression (2), which contact surface can be moved spring-compliantly in the radial direction of the clamping channel, and the at least one spring element being formed by a spring tab (5) moulded integrally with the clamping body (1), **characterised in that** each spring tab (5) extends from the cross-over point (7) to the clamping body (1), protruding in a slot (11) radially recessed on the inside of the depression (2) and forms the contact surface (21) with the protruding section for the conduit to be fastened, which contact surface can be moved spring-compliantly and radially in the slot (11).

2. The clamp according to Claim 1, **characterised in that** each depression (2) has a number of spring tabs (5) arranged spaced apart from one another in the axial direction.

3. The clamp according to Claim 2, **characterised in that** the spring tabs (5) are arranged in pairs, both spring tabs (5) of a pair respectively being connected to the clamping body (1) at the edge (7) of the depression (2) and extending, aligned with one another, in an extension perpendicular to the axial direction of the clamping channel protruding in the slot (11) to a central region of the depression situated at the bottom of the depression (2).

4. The clamp according to Claim 3, **characterised in that** the slots (11) for the spring tabs (5) are separated from one another by a region (13) free of slots (11) extending in the central longitudinal region of the respective depression (2) over the entire inside of the latter, and each slot (11) extends from the central region (13) free of slots (11) in the axial direction to a region (13) which is spaced apart from the adjacent axial end edge of the clamping body (1).

5. The clamp according to Claim 4, **characterised in that** each slot (11) ends on the respectively protruding free ends (15) of the spring tabs (5) in a crossbar (17) running in the axial direction, which crossbar is common to both slots (11) associated with a pair of spring tabs.

6. The clamp according to Claim 5, **characterised in that** the end surface (19) of the crossbars (17) lying radially on the inside for the clamping channel formed on the respective depression (2) defines the same diameter as the regions (13) free of slots (11) which extend to the side of the slots (11) along the entire inside of the depressions (2).

7. The clamp according to any of Claims 1 to 6, **characterised in that** both clamping bodies (1) have depressions (2) in order to form clamping channels.

8. The clamp according to Claim 7, **characterised in that** spring elements (5) are provided on the depressions (2) of both clamping bodies (1).

9. The clamp according to Claim 8, **characterised in that** the depressions (2) of both clamping bodies (1) and/or the spring elements (5) on the depressions (2) of both clamping bodies (1) are designed uniformly.

10. The clamp according to any of Claims 1 to 9, **characterised in that** at least one of the clamping bodies (1) is injection moulded from a plastic material, preferably a polyamide with flame retardant.

## Revendications

1. Collier de fixation d'au moins un conduit, de préférence de plusieurs conduits, comprenant deux pièces (1) de serrage, qui peuvent être appliquées l'une, contre l'autre par un moyen de serrage et dont au moins l'une a, pour des conduits à fixer, respectivement une cavité (2), qui forme une partie d'un canal de serrage s'étendant dans la direction axiale du conduit à fixer, et dans lequel il est prévu, du côté intérieur de la cavité (2) respective, un dispositif (5) provoquant une modification par endroit du diamètre efficace du canal de serrage, dans lequel le dispositif modifiant par endroit le diamètre efficace du canal de serrage est formé par au moins un élément (5) à ressort, qui forme pour le conduit à fixer une surface (21) d'application, qui s'étend le long d'au moins une partie du côté intérieur de la cavité (2) et qui est mobile en cédant comme un ressort dans la direction radiale du canal de serrage et dans lequel le au moins un élément à ressort est formé par un bec (5) de ressort d'une seule pièce avec la pièce (1) de serrage, **caractérisé en ce que** chaque bec (5) de ressort s'étend, en partant du point (7) de transition à la pièce (1) de serrage, en saillie dans un évidement (11) creusé radialement sur la face intérieure de la cavité (2) et forme, par la partie en saillie pour le conduit à fixer, la surface (21) d'application, qui est mobile radialement en cédant comme un ressort dans l'évidement (11).

2. Collier suivant la revendication 1, **caractérisé en ce que** chaque évidement (2) a plusieurs becs (5) de ressort disposés à distance les uns des autres dans la direction axiale.

3. Collier suivant la revendication 2, **caractérisé en ce que** les becs (5) de ressort sont disposés par paire, deux becs (5) de ressort d'une paire étant liés respectivement au bord (7) de la cavité (2) à la pièce (1) de serrage et, en étant alignés, s'étendant en une étendue perpendiculaire à la direction axiale du canal de serrage dans l'évidement (11) en saillie vers une partie centrale, au fond de la cavité (2), du canal.

4. Collier suivant la revendication 3, **caractérisé en ce que** les évidements (11), pour les becs (5) de ressort, sont séparés les uns des autres par une région (13) exempt d'évidement (11) et s'étendant dans la région longitudinale médiane de la cavité (2) respective sur toute sa face intérieure et chaque évidement (11) s'étend dans la direction axiale à partir de la région (13) libre médiane, exempte d'évidement (11) jusqu'à une région (13), qui est à distance du bord d'extrémité axial voisin de la pièce (1) de serrage.

5. Collier suivant la revendication 4, **caractérisé en ce que** chaque évidement (11) se termine, aux extrémités (15) libres en saillie des becs (5) de ressort, en une traverse (17), qui s'étend dans la direction axiale et qui est commune aux deux évidements (11) associés à une paire de becs de ressort.

6. Collier suivant la revendication 5, **caractérisé en ce que** la surface (19) terminale intérieure radialement des traverses (17) définit, pour le canal de serrage formé sur la cavité (2) respective, le même diamètre que les extrémités (13) exemptes d'évidement (11), qui s'étendent latéralement aux évidements (11) le long de toute la face intérieure des cavités (2).

7. Collier suivant l'une des revendications 1 à 6, **caractérisé en ce que** les deux pièces (1) de serrage ont des cavités (2) de formation de canaux de serrage.

8. Collier suivant la revendication 7, **caractérisé en ce qu'**il est prévu des éléments (5) de ressort sur les cavités (2) des deux pièces (1) de serrage.

9. Collier suivant la revendication 8, **caractérisé en ce que** les cavités (2) des deux pièces (1) de serrage et/ou les éléments (5) de ressort sont conformés de la même façon sur les cavités (2) des deux pièces (1) de ressort.

10. Collier suivant l'une des revendications 1 à 9, **caractérisé en ce qu'**au moins l'une des pièces (1) de serrage est moulée par injection en une matière plastique, de préférence en polyamide à agent ignifuge.
